# EUROPEAN PATENT APPLICATION

(11) **EP 4 697 765 A1**
(43) Date of publication of application: **18.02.2026**
(21) Application number: 23932535.0
(22) Date of filing: 14.04.2023
(51) Int. Cl.: H04W 8/00

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LIU, Jianning, Beijing 100085 (CN); MAO, Yuxin, Beijing 100085 (CN)
(74) Representative: Dehns Germany Partnerschaft mbB
(86) International application number: PCT/CN2023/088537
(87) International publication number: WO 2024/212254

(57) **Abstract**

Provided in the embodiments of the present disclosure are an information processing method and apparatus, and a communication device and a storage medium. The information processing method is executed by a first UE, and comprises: sending first information, wherein the first information at least comprises: a first identifier of a first UE, a second identifier of at least one second UE, and a first RSC corresponding to the first identifier, and the first RSC is used for indicating a first relay service.

## Description

### TECHNICAL FIELD

The present disclosure relates to, but is not limited to, a field of wireless communication technologies, and more particularly relates to an information processing method and apparatus, a communication device, and a storage medium.

### BACKGROUND

In wireless communication technologies, relay communication is introduced, for example, User Equipment (UE)-to-UE (UE-to-UE, U2U) relay communication of Proximity-based Service (ProSe), or UE-to-Network (U2N) relay communication of Proximity-based Service.

### SUMMARY

Embodiments of the present disclosure provide an information processing method and apparatus, a communication device, and a storage medium.

According to a first aspect of embodiments of the present disclosure, an information processing method is provided, performed by a first UE, including:

sending first information, where the first information at least includes: a first identifier of the first UE, a second identifier of at least one second UE, and a first Relay Service Code (RSC) corresponding to the first identifier; the first RSC is configured to indicate a first relay service.

In some embodiments, the first information further includes at least one of:
a relay indication, configured to indicate whether the second UE is allowed to broadcast the first identifier; or
a type indication, configured to indicate a type of a discovery message in relay communication.

In some embodiments, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

In some embodiments, sending the first information includes one of:
sending an announcement message, where the announcement message includes the first information; or
sending a solicitation message, where the solicitation message includes the first information.

In some embodiments, the second UE is a relay UE or a remote UE of U2U relay communication.

In some embodiments, the second UE is a remote UE; the method further includes: receiving a response message, where the response message at least includes: the first identifier, the second identifier, and a second RSC corresponding to the second identifier; the second RSC is configured to indicate a second relay service.

According to a second aspect of embodiments of the present disclosure, an information processing method is provided, performed by a second UE, including:
receiving first information, where the first information at least includes: a first identifier of the first UE, a second identifier of at least one second UE, and a first RSC corresponding to the first identifier; the first RSC is configured to indicate a first relay service.

In some embodiments, the first information further includes at least one of:
a relay indication, configured to indicate whether the second UE is allowed to broadcast the first identifier; or
a type indication, configured to indicate a type of a discovery message in relay communication.

In some embodiments, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

In some embodiments, receiving the first information includes one of:
receiving an announcement message, where the announcement message includes the first information; or
receiving a solicitation message, where the solicitation message includes the first information.

In some embodiments, the second UE is a relay UE of U2U relay communication; the method includes: updating second information according to the first information, where the second information includes: at least one first identifier and the first RSC corresponding to the first identifier.

In some embodiments, the method further includes: determining, based on the first relay service indicated by the first RSC not being supported by the second UE, not to update the first identifier and the first RSC corresponding to the first identifier into the first information.

In some embodiments, the second UE is a remote UE; the method includes one of:
updating, based on the remote UE being authorized as a relay UE, second information according to the first information, where the second information includes: at least one first identifier and the first RSC corresponding to the first identifier; or
creating, based on the remote UE being authorized as a relay UE, second information according to the first information.

In some embodiments, the method further includes: sending a response message, where the response message at least includes: the first identifier, the second identifier, and a second RSC corresponding to the second identifier; the second RSC is configured to indicate a second relay service.

According to a third aspect of embodiments of the present disclosure, an information processing apparatus is provided, including:
a first sending module, configured to send first information, where the first information at least includes: a first identifier of the first UE, a second identifier of at least one second UE, and a first RSC corresponding to the first identifier; the first RSC is configured to indicate a first relay service.

In some embodiments, the first information further includes at least one of:
a relay indication, configured to indicate whether the second UE is allowed to broadcast the first identifier; or
a type indication, configured to indicate a type of a discovery message in relay communication.

In some embodiments, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

In some embodiments, the first sending module is configured to perform one of:
sending an announcement message, where the announcement message includes the first information; or
sending a solicitation message, where the solicitation message includes the first information.

In some embodiments, the second UE is a relay UE or a remote UE of U2U relay communication.

In some embodiments, the second UE is a remote UE; the apparatus further includes: a first receiving module, configured to receive a response message, where the response message at least includes: the first identifier, the second identifier, and a second RSC corresponding to the second identifier; the second RSC is configured to indicate a second relay service.

According to a fourth aspect of embodiments of the present disclosure, an information processing apparatus is provided, including:
a second receiving module, configured to receive first information, where the first information at least includes: a first identifier of the first UE, a second identifier of at least one second UE, and a first RSC corresponding to the first identifier; the first RSC is configured to indicate a first relay service.

In some embodiments, the first information further includes at least one of:
a relay indication, configured to indicate whether the second UE is allowed to broadcast the first identifier; or
a type indication, configured to indicate a type of a discovery message in relay communication.

In some embodiments, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

In some embodiments, the second receiving module is configured to perform one of:
receiving an announcement message, where the announcement message includes the first information; or
receiving a solicitation message, where the solicitation message includes the first information.

In some embodiments, the second UE is a relay UE of U2U relay communication; the apparatus includes: a processing module, configured to update second information according to the first information, where the second information includes: at least one first identifier and the first RSC corresponding to the first identifier.

In some embodiments, the processing module is configured to determine, based on the first relay service indicated by the first RSC not being supported by the second UE, not to update the first identifier and the first RSC corresponding to the first identifier into the first information.

In some embodiments, the second UE is a remote UE; the processing module is configured to perform one of:
updating, based on the remote UE being authorized as a relay UE, second information according to the first information, where the second information includes: at least one first identifier and the first RSC corresponding to the first identifier; or
creating, based on the remote UE being authorized as a relay UE, second information according to the first information.

In some embodiments, the apparatus further includes: a second sending module, configured to send a response message, where the response message at least includes: the first identifier, the second identifier, and a second RSC corresponding to the second identifier; the second RSC is configured to indicate a second relay service.

According to a fifth aspect of embodiments of the present disclosure, a communication device is provided, including: a processor, a transceiver, a memory, and an executable program stored on the memory and operable to be run by the processor, where when the processor runs the executable program, the processor executes the measurement method provided by the foregoing first aspect or second aspect.

According to a sixth aspect of embodiments of the present disclosure, a computer storage medium is provided, where the computer storage medium stores an executable program; when executed by a processor, the executable program is capable of implementing the measurement method provided by the foregoing first aspect or second aspect.

The technical solutions provided by embodiments of the present disclosure may include the following beneficial effects:

In embodiments of the present disclosure, the first UE sends the first information, where the first information at least includes a first identifier of the first UE, a second identifier of at least one second UE, and a first RSC corresponding to the first identifier, and the first RSC is configured to indicate a first relay service. In this way, the UE receiving the first information may know through which first RSC the first relay service is indicated, and may also know which first UEs are capable of performing which first relay services.

It should be understood that the technical solutions provided by embodiments of the present disclosure, the above general description and the following detailed description are merely exemplary and explanatory, and cannot limit the embodiments of the present disclosure.

### BRIEF DESCRIPTION OF THE DRAWINGS

The drawings herein are incorporated into and constitute a part of the present specification, and illustrate embodiments in accordance with the present disclosure, and together with the description are used to explain the principles of embodiments of the present disclosure.
FIG. 1 is a schematic structural diagram of a wireless communication system shown according to an exemplary embodiment.
FIG. 2 is a flow diagram illustrating a process of relay UE discovery of Proximity-based Service U2U according to an exemplary embodiment.
FIG. 3 is a flow diagram illustrating a process of direct discovery of Proximity-based Service according to an exemplary embodiment.
FIG. 4 is a flow diagram illustrating a process of direct discovery of Proximity-based Service according to another exemplary embodiment.
FIG. 5 is a schematic flow diagram of a process of an information processing method shown according to an exemplary embodiment.
FIG. 6 is a schematic flow diagram of a process of an information processing method shown according to an exemplary embodiment.
FIG. 7 is a schematic flow diagram of a process of an information processing method shown according to an exemplary embodiment.
FIG. 8 is a schematic flow diagram of a process of an information processing method shown according to an exemplary embodiment.
FIG. 9 is a schematic flow diagram of a process of an information processing method shown according to an exemplary embodiment.
FIG. 10 is a schematic flow diagram of a process of an information processing method shown according to an exemplary embodiment.
FIG. 11 is a schematic flow diagram of a process of an information processing method shown according to an exemplary embodiment.
FIG. 12 is a schematic structural diagram of an information processing apparatus shown according to an exemplary embodiment.
FIG. 13 is a schematic structural diagram of an information processing apparatus shown according to an exemplary embodiment.
FIG. 14 is a schematic structural diagram of a UE shown according to an exemplary embodiment.
FIG. 15 is a schematic structural diagram of a communication device shown according to an exemplary embodiment.

### DETAILED DESCRIPTION

Exemplary embodiments will be described herein in detail, examples of which are illustrated in the drawings. When referring to the drawings in the following description, unless otherwise indicated, the same numerals in different drawings denote the same or similar elements. The embodiments described in the following exemplary embodiments do not represent all embodiments consistent with the embodiments of the present disclosure. On the contrary, they are merely examples of apparatuses and methods consistent with some aspects of the embodiments of the present disclosure.

The terms used in embodiments of the present disclosure are merely for the purpose of describing particular embodiments, and are not intended to limit embodiments of the present disclosure. The singular forms "a", "an", "the", "said", "aforementioned", and "this" as used in embodiments of the present disclosure are intended to also include the plural forms, unless the context clearly indicates otherwise. It should also be understood that the term "and/or" as used herein refers to and includes any and all possible combinations of one or more of the associated listed items. In embodiments of the present disclosure, "a plurality of' refers to two or more. The prefixes "first", "second", and the like in embodiments of the present disclosure are merely used to distinguish different objects of description, and do not impose limitations on the position, order, priority, quantity, or content of the objects of description; statements about the objects of description should be construed in accordance with the context of the claims or embodiments, and the use of prefix numerals should not be construed as additional limitations. For example, various information may be described as "first", "second", or "third", but such information should not be limited to these terms. These terms are merely used to distinguish information of the same type from each other. For example, without departing from the scope of embodiments of the present disclosure, first information may also be referred to as second information, and similarly, second information may also be referred to as first information. Depending on the context, the word "if' as used herein may be interpreted as "when", "upon", or "in response to determining." In some embodiments, the names of information and the like are not limited to those recorded in the embodiments; the terms "information", "message", "signaling", "report", "indication", "configuration", and "data" may be used interchangeably.

In some embodiments of the present disclosure, the terms "acquire", "obtain", "derive", "receive", and "transmit (send and/or receive)" may be used interchangeably, and may be construed as including meanings such as receiving from another entity, acquiring from a protocol, or obtaining through self-processing.

In some embodiments of the present disclosure, the terms "send", "report", "issue", and "transmit (send and/or receive)" may be used interchangeably.

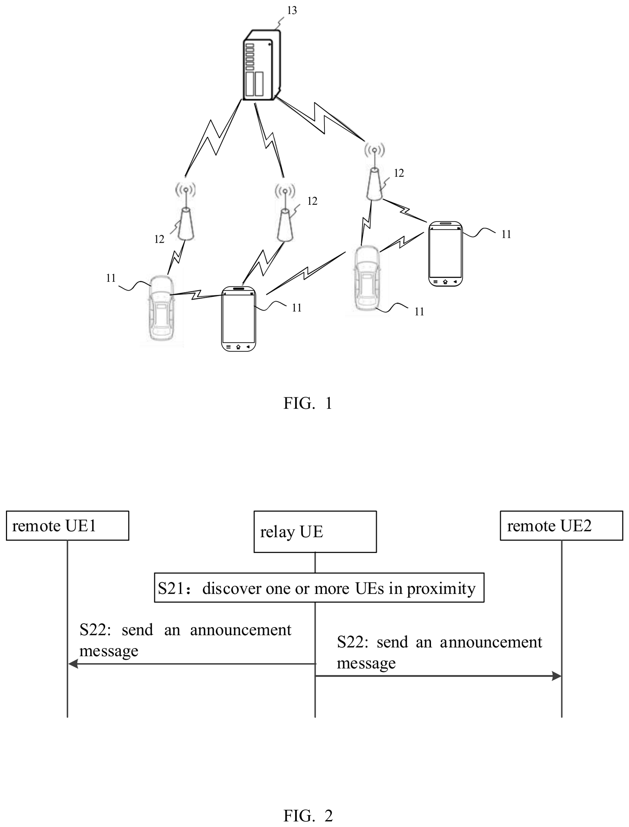

Please refer to FIG. 1, which illustrates a schematic structural diagram of a wireless communication system provided by embodiments of the present disclosure. As shown in FIG. 1, the wireless communication system is a communication system based on cellular mobile communication technology, and the wireless communication system may include: several UEs 11 and several access devices 12.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (also referred to as a "cellular" phone), or a computer having an IoT UE, and may be a fixed, portable, pocket, handheld, computer-integrated, or in-vehicle device. For example, the UE 11 may be a Station (STA), a subscriber unit, a subscriber station, a mobile station, a mobile, a remote station, an access point, a remote terminal, an access terminal, a user terminal, a user agent, or a User Equipment (UE). Alternatively, the UE 11 may also be a device of an unmanned aerial vehicle. Alternatively, the UE 11 may be an in-vehicle device, for example, an on-board computer having wireless communication function, or a wireless communication device externally connected to an on-board computer. Alternatively, the UE 11 may be a roadside device, for example, a street lamp, a traffic light, or another roadside device having wireless communication function.

The access device 12 may be a network-side device in the wireless communication system. The wireless communication system may be a 4th generation mobile communication (4G) system, also referred to as a Long Term Evolution (LTE) system; or the wireless communication system may be a 5G system, also referred to as a New Radio (NR) system or a 5G NR system; or the wireless communication system may be a next generation system beyond 5G. The access network in the 5G system may be referred to as a New Generation-Radio Access Network (NG-RAN). Alternatively, the system may be an MTC system.

The access device 12 may be an evolved access device (eNB) used in a 4G system. Alternatively, the access device 12 may be an access device (gNB) adopting a centralized-distributed architecture in a 5G system. When the access device 12 adopts the centralized-distributed architecture, it generally includes a central unit (CU) and at least two distributed units (DUs). The central unit is provided with a protocol stack of a Packet Data Convergence Protocol (PDCP) layer, a Radio Link Control (RLC) layer, and a Media Access Control (MAC) layer; the distributed unit is provided with a protocol stack of a Physical (PHY) layer. The embodiments of the present disclosure are not limited to the specific implementation manner of the access device 12.

A wireless connection may be established between the access device 12 and the UE 11 via a wireless air interface. In different embodiments, the wireless air interface may be a wireless air interface based on the 4th generation mobile communication network technology (4G) standard; or the wireless air interface may be a wireless air interface based on the 5th generation mobile communication network technology (5G) standard, for example, the wireless air interface is a New Radio; or the wireless air interface may also be a wireless air interface based on a next generation mobile communication network technology standard beyond 5G.

In some embodiments, the wireless communication system may further include a core network element 13.

Several of access network elements 12 are respectively connected to the core network element 13. The core network element 13 may be a core network device in the wireless communication system, for example, the core network element 13 may be a Mobility Management Entity (MME) in an Evolved Packet Core (EPC). Alternatively, the core network device may also be another core network device, such as a Serving GateWay (SGW), a Public Data Network GateWay (PGW), a Policy and Charging Rules Function (PCRF), or a Home Subscriber Server (HSS); or the core network element 13 may also be a core network device in 5G, for example, a Policy Control Function (PCF), a Session Management Function (SMF), an Access and Mobility Management Function (AMF), a Unified Data Management (UDM), or a User Plane Function (UPF). The embodiments of the present disclosure are not limited to the implementation forms of the core network element 13.

Referring to FIG. 2, an embodiment of the present disclosure provides a process of relay discovery in Proximity-based Service UE-to-UE (U2U). The Proximity-based Service in the present disclosure may include a 5G Proximity-based Service. The process shown in FIG. 2 may include the following steps:
step S21: a relay UE discovers one or more UEs in proximity.

In an example of the present disclosure, the UE discovered by the relay UE may be a remote UE; for example, the remote UE may be a remote UE1 or a remote UE2.

In an example of the present disclosure, the relay UE discovers another UE in proximity; for example, the relay UE may discover the UE in proximity via a previous discovery or communication process. For example, the relay UE may discover one or more remote UEs by broadcasting a signal, or the relay UE may receive a signal sent by one or more remote UEs and discover the one or more remote UEs.

In an example of the present disclosure, the relay UE acquires an identifier (User Info ID) of each UE corresponding to a Relay Service Code (RSC).

step S22: the relay UE sends an announcement message (UE-to-UE Relay Discovery Announcement message).

In an example of the present disclosure, the announcement message may include a type of a discovery message, a User information identifier (User Info ID) of the relay UE, an RSC, and a list of User Info IDs of the remote UEs.

In an example of the present disclosure, the announcement message may include a source Layer-2 (L2) ID and a destination L2 ID. The source L2 ID and the destination L2 ID are configured to establish a communication connection between the UE corresponding to the source L2 ID and the destination L2 ID.

In an example of the present disclosure, the relay UE announces the User Info IDs of other UEs in proximity; these UEs provide a relay indication to the relay UE when being discovered, and the relay indication is configured to indicate whether the UE is allowed to broadcast the User Info ID of the UE.

In an example of the present disclosure, a remote UE monitors an announcement message from the relay UE. The remote UE may determine a destination L2 ID for receiving the signaling (such as the announcement message).

In an embodiment of the present disclosure, the relay UE acquires the User Info IDs of other UEs in proximity through each RSC, which means that the relay UE needs to collect the destination User Info IDs, but also needs the RSC of the UE. When the RSC is missing, the relay UE does not know which RSC the remote UE is allowed to use.

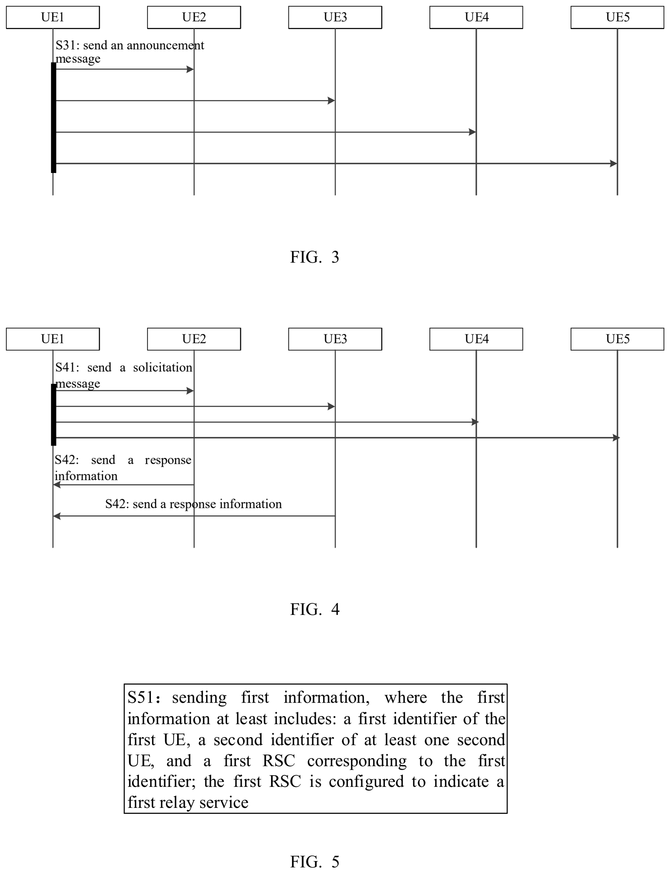

As shown in FIG. 3, an embodiment of the present disclosure provides a process in which a UE performs direct discovery of a Proximity-based Service. The Proximity-based Service in the present disclosure may include a 5G Proximity-based Service. The process shown in FIG. 3 may include the following step:
step S31: UE1 sends an announcement message. Optionally, the announcing UE (for example, UE1) sends an announcement message, where the announcement message may include at least one of: a type of a discovery message, a ProSe Application Code or a ProSe Restricted Code, a relay indication, a security protection element, or metadata information. The Application layer metadata information may be included in the announcement message as metadata information. Optionally, UE1 may send the announcement message to at least one of UE2, UE3, UE4, or UE5. Optionally, the announcement message may include a source L2 ID and a destination L2 ID for sending the announcement message.

In an example of the present disclosure, if UE1 broadcasts its User Info ID during a 5G Proximity-based Service discovery, the announcement message includes a relay indication.

As shown in FIG. 4, an embodiment of the present disclosure provides a process in which a UE performs direct discovery of a Proximity-based Service. The Proximity-based Service in the present disclosure may include a 5G Proximity-based Service. The process shown in FIG. 4 may include the following steps:
step S41: UE1 sends a solicitation message.

In an example of the present disclosure, the UE1 sends a solicitation message, where the solicitation message may include at least one of: a type of a discovery message, a ProSe Query Code, a relay indication, and a security protection element. Optionally, the UE1 may send the solicitation message to at least one of UE2, UE3, UE4, or UE5. Optionally, the solicitation message may include a source L2 ID and a destination L2 ID for the solicitation message.

In an example of the present disclosure, the UE1 determines a destination L2 ID for receiving signaling (such as an announcement message).

In an example of the present disclosure, if the UE1 broadcasts its User Info ID during the 5G Proximity-based Service discovery, the solicitation message includes a relay indication.

step S42: UE1 and/or UE2 and the like send response information. Optionally, UE2, UE3, UE4, and/or UE5 send the response information; the response information is configured to respond to the solicitation message. Optionally, the response message includes at least one of: a type of a discovery message, a ProSe Response Code, a relay indication, a security protection element, or metadata information. The Application layer metadata information may be included in the response message as metadata. Optionally, UE1 receives a response message sent by at least one of UE2, UE3, UE4, or UE5. Optionally, the response message may include a destination L2 ID and a source L2 ID for sending the response message.

In the above-used embodiment, during the Proximity-based Service direct discovery process, the announcement message or the solicitation message only includes a relay indication to indicate whether the relay UE is allowed to broadcast its User Info ID during the Proximity-based Service U2U discovery. However, the announcement message or the solicitation message does not include an RSC, that is, no RSC is sent during the Proximity-based Service direct discovery process, such that the UE receiving the announcement message or the solicitation message cannot know which relay services are allowed for the UE that sends the announcement message or the solicitation message.

As shown in FIG. 5, an embodiment of the present disclosure provides an information processing method, performed by a first UE, including:
step S51: first information is sent, where the first information at least includes: a first identifier of the first UE, a second identifier of at least one second UE, and a first RSC corresponding to the first identifier; the first RSC is configured to indicate a first relay service.

The first UE and the second UE involved in embodiments of the present disclosure may each be any mobile terminal or fixed terminal. For example, the first UE and the second UE may each be at least one of: a mobile phone, a computer, a server, a wearable device, a game control platform, a roadside device, an in-vehicle device, a multimedia device, or an industrial device; or, the first UE and the second UE may each be at least one of: an eMBB terminal, a Reduced capability UE (Redcap), a Redcap terminal, or an extended Redcap (eRedcap) terminal.

In some embodiments, sending the first information in step S51 includes: sending the first information to at least one second UE. In embodiments of the present disclosure, the at least one may be one or more; the more may be two or more.

Optionally, the first UE may be a discoverer UE in U2U relay communication or U2N relay communication. Optionally, the first UE is a source UE or a discoverer UE; the source UE or the discoverer UE refers to the UE sending the first information.

Optionally, the second UE is a relay UE or a remote UE in U2U relay communication. For example, in U2U relay communication, a sender UE, a relay UE, and/or a receiver UE are included; the second UE may be the relay UE and/or the receiver UE. The receiver UE is the remote UE.

Optionally, the second UE is a relay UE in the U2N relay communication.

Optionally, the second UE is a destination UE or a discovered UE. The destination UE or the discovered UE refers to the UE receiving the first information.

In some embodiments, the UE corresponding to the second identifier is the UE receiving the first information. The second identifier includes an identifier of a destination address. In embodiments of the present disclosure, the first UE may broadcast the first information to one or more destination addresses, such that the first information is stored by the UE(s) corresponding to the one or more destination addresses.

In some embodiments, the first relay service and the second relay service described below may each be a service provided by UE-to-UE relay. The service may be any service, for example, a service related to a session, video, and/or a game.

In some embodiments, the first RSC is configured to indicate a first relay connectivity service. In embodiments of the present disclosure, the second UE may determine a relay service to be performed based on the first RSC. For example, the first relay connectivity service may be a connectivity service provided by UE-to-UE relay.

In some embodiments, one first RSC is configured to indicate one relay service. Optionally, the first information may include at least one first RSC.

In some embodiments, the first identifier may be any number or index indicating the first UE. Optionally, the first identifier is a user information identifier (User Info ID). Optionally, the first identifier may be a Generic Public Subscription Identifier (GPSI) of the first UE or a Subscriber Permanent Identifier (SUPI) of the first UE.

In some embodiments, the second identifier may be any number or index indicating the second UE. Optionally, the second identifier may be a destination identifier (destination ID). Optionally, the second identifier may be a GPSI or a SUPI of the second UE.

In some embodiments, the first identifier and the first RSC corresponding to the first identifier are used by the second UE to update and/or create second information. For example, if the second UE is a relay UE of U2U relay communication, the first identifier and the first RSC corresponding to the first identifier are used by the second UE to create second information or to update second information. For example, if the second UE is a remote UE, the first identifier and the first RSC corresponding to the first identifier are used by the second UE to update the second information.

In some embodiments, the first information may further include: a first L2 ID of the first UE and a second L2 ID of the second UE. The first L2 ID and the second L2 ID may be used for communication connection between the first UE and the second UE.

In embodiments of the present disclosure, the first UE sends first information, where the first information at least includes: a first identifier of the first UE, a second identifier of at least one second UE, and a first RSC corresponding to the first identifier; and the first RSC is configured to indicate a first relay service. Thus, the UE receiving the first information may know which first RSC indicates the first relay service, and may know which first UE may perform which first relay service. In this way, the execution of the subsequent relay service between the first UE and the second UE is facilitated.

In some embodiments, the first information further includes at least one of:
a relay indication, configured to indicate whether the second UE is allowed to broadcast the first identifier; or
a type indication, configured to indicate a type of a discovery message in relay communication.

Optionally, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

For example, the first UE sends the first information to the second UE, where the first information includes: the first identifier, the second identifier, the first RSC corresponding to the first identifier, and the relay indication. When the relay indication is the first value, for example "0" or null, it is configured to indicate that the second UE is not allowed to broadcast the first identifier; or, when the relay indication is a second value, for example "1", it is configured to indicate that the second UE is allowed to broadcast the first identifier; or, when the relay indication is a third value, for example an integer greater than "1", it is configured to indicate that the first identifier is allowed to be broadcast via multi-hop. For example, when the relay indication is "3", it is configured to indicate that the first identifier is allowed to be broadcast via 3 hops.

In the embodiments of the present disclosure, the relay indication may be used to indicate whether broadcasting the first identifier of the first UE is allowed. In this way, the second UE receiving the first information may accurately know whether it is allowed to broadcast the discovery of the first identifier of the first UE, that is, such that the second UE may accurately know whether the discovery of the first UE is allowed.

Optionally, the type indication is one of:
a first type indication, configured to indicate that the type of the discovery message is a direct discovery type; or
a second type indication, configured to indicate that the type of the discovery message is a relay discovery type.

In embodiments of the present disclosure, the type of discovery message may be indicated through the type indication, such that the second UE receiving the first information may accurately know the type of the discovery message.

In some embodiments, sending the first information in step S51 includes one of:
sending an announcement message, where the announcement message includes the first information;
sending a solicitation message, where the solicitation message includes the first information.

An embodiment of the present disclosure provides an information processing method, performed by a first UE, including: sending an announcement message, where the announcement message includes the first information; or sending a solicitation message, where the solicitation message includes the first information.

Optionally, the first UE sends the announcement message, including: the first UE sends the announcement message to at least one second UE.

Optionally, the first UE sends the solicitation message, including: the first UE sends the solicitation message to at least one second UE.

In embodiments of the present disclosure, the first information may be sent by using the solicitation message, such that a utilization rate of existing signaling may be improved and additional signaling overhead may be reduced. Moreover, multiple ways of sending the first information may be provided, supporting more application scenarios.

It should be noted that those skilled in the art may understand that the method provided in embodiments of the present disclosure may be executed independently, or may be executed together with some methods in embodiments of the present disclosure or some methods in the related art.

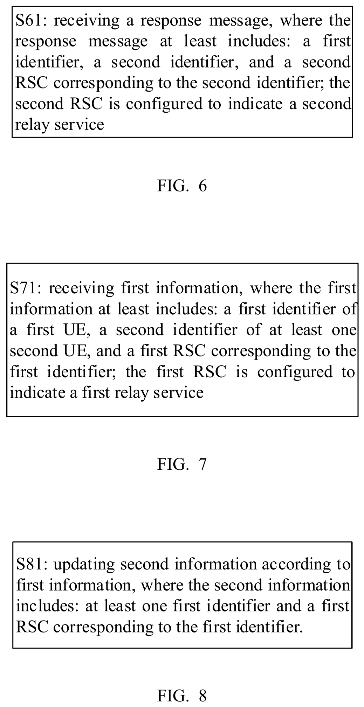

As shown in FIG. 6, an embodiment of the present disclosure provides an information processing method, performed by a first UE, including:
step S61: a response message is received, where the response message at least includes: the first identifier, the second identifier, and a second RSC corresponding to the second identifier; the second RSC is configured to indicate a second relay service.

Optionally, receiving the response information in step S61 includes: receiving the response message sent by the second UE. Optionally, the first UE receives the response information sent by the remote UE or the discovered UE.

Optionally, the second relay service includes a second relay connectivity service. The second RSC is configured to indicate the second relay connectivity service.

Optionally, the second RSC corresponding to the second identifier may be one or more; one second RSC may be configured to indicate one second relay service.

Optionally, the response message is determined based on the solicitation message.

Optionally, the response message includes a relay indication. The relay indication may be the relay indication described in the above embodiments.

In embodiments of the present disclosure, the first UE may receive a response message, where the second RSC included in the response message may be configured to indicate the second relay service allowed by the second UE, such that the first UE may accurately know the relay service allowed by the second UE, which is beneficial for the first UE to discover the second UE.

In some embodiments, the first UE may store the second identifier and the second RSC corresponding to the second identifier in the first UE. For example, the first UE updates the second identifier and the second RSC corresponding to the second identifier in third information of the first UE; the third information may at least include: at least one identifier of a UE and an RSC corresponding to the identifier of the UE. In this way, the first UE may know which second RSC is used to indicate the second relay service, and may also know which first relay services are allowed to be performed by the second UE, which facilitates the execution of subsequent relay service between the first UE and the second UE.

It should be noted that those skilled in the art may understand that the method provided in embodiments of the present disclosure may be executed independently, or may be executed together with some methods in embodiments of the present disclosure or some methods in the related art.

The following information processing method is performed by a second UE, and the description is similar to the information processing method performed by the first UE as described above. For technical details not disclosed in the embodiments of the information processing method of the second UE, please refer to the description of the example of the information processing method performed by the first UE, which will not be described in detail herein.

As shown in FIG. 7, an embodiment of the present disclosure provides an information processing method, performed by a second UE, including:
step S71: first information is received, where the first information at least includes: a first identifier of a first UE, a second identifier of at least one second UE, and a first RSC corresponding to the first identifier; the first RSC is configured to indicate a first relay service.

In some embodiments, receiving the first information in step S71 includes: receiving the first information sent by the first UE.

In some embodiments of the present disclosure, the first UE and the second UE may respectively be the first UE and the second UE in the above embodiments; the first information may be the first information in the above embodiments; the first identifier and the second identifier may respectively be the first identifier and the second identifier in the above embodiments; the first RSC may be the first RSC in the above embodiments; and the first relay service may be the first relay service in the above embodiments.

Optionally, the first UE may be a discoverer UE in U2U relay communication or U2N relay communication.

Optionally, the second UE may be a relay UE or a remote UE in U2U relay communication.

Optionally, the second UE may be a relay UE in U2N relay communication.

Optionally, the first relay service includes a first relay connectivity service. The first RSC is configured to indicate the first relay connectivity service.

Optionally, the first information further includes at least one of: a relay indication, configured to indicate whether the second UE is allowed to broadcast the first identifier; and a type indication, configured to indicate a type of a discovery message in relay communication.

Optionally, the relay indication is: a first value, configured to indicate that the second UE is not allowed to broadcast the first identifier; or a second value, configured to indicate that the second UE is allowed to broadcast the first identifier; or a third value, configured to indicate that the first identifier is allowed to be broadcast via multi-hop.

Optionally, the type indication is: a first type indication, configured to indicate that the type of the discovery message is a direct discovery type; or a second type indication, configured to indicate that the type of the discovery message is a relay discovery type.

Optionally, the first information may further include: a first L2 ID of the first UE and a second L2 ID of the second UE.

In some embodiments, receiving the first information in step S71 includes one of: receiving an announcement message, where the announcement message includes the first information; or receiving a solicitation message, where the solicitation message includes the first information.

An embodiment of the present disclosure provides an information processing method, performed by a second UE, including: receiving an announcement message, where the announcement message includes the first information; or receiving a solicitation message, where the solicitation message includes the first information.

The above embodiments may specifically refer to the description on the first UE side, which will not be repeated herein.

It should be noted that those skilled in the art may understand that the method provided in embodiments of the present disclosure may be executed independently, or may be executed together with some methods in embodiments of the present disclosure or some methods in the

### related art.

An embodiment of the present disclosure provides an information processing method, performed by a second UE, including: updating or creating second information according to the first information. Optionally, the second information includes: at least one first identifier and the first RSC corresponding to the first identifier. Optionally, the first identifier and the first RSC have a mapping relationship or a binding relationship. Optionally, the second UE is a relay UE or a remote UE of U2U relay communication.

As shown in FIG. 8, an embodiment of the present disclosure provides an information processing method, performed by a second UE, including:
step S81: second information is updated according to first information, where the second information includes: at least one first identifier and a first RSC corresponding to the first identifier.

Optionally, the second UE is a relay UE in U2U relay communication.

For example, the relay UE receives the first information, and updates the first identifier and the first RSC corresponding to the first identifier in the first information into the second information.

Thus, the relay UE may store, that is, collect the first identifier of the first UE and the corresponding first RSC, so as to facilitate the relay UE to subsequently broadcast the first identifier of the first UE, etc, and that is, to facilitate the relay UE to discover the first UE.

An embodiment of the present disclosure provides an information processing method, performed by a second UE, including: determining, based on the first relay service indicated by the first RSC not being supported by the second UE, not to update the first identifier and the first RSC corresponding to the first identifier into the first information. Optionally, the first relay service not being supported by the second UE includes: the second UE not being configured with the first relay service, or the second UE not supporting the first relay service.

For example, the relay UE receives the first information; if the relay UE determines that the first relay service indicated by the first RSC in the first information is not configured in the relay UE or is not supported by the relay UE, it is determined that the relay UE is not allowed to discover the first UE; and the relay UE does not update the first identifier of the first UE and the corresponding first RSC into the second information.

Thus, when the first relay service indicated by the first RSC in the first information is not supported or not configured in the relay UE, the relay UE is prevented from collecting the first identifier of the first UE and the corresponding first RSC, thereby enabling the relay UE to accurately determine that broadcasting the identifier of the first UE is not allowed, that is, determining that the relay UE is not allowed to discover the first UE.

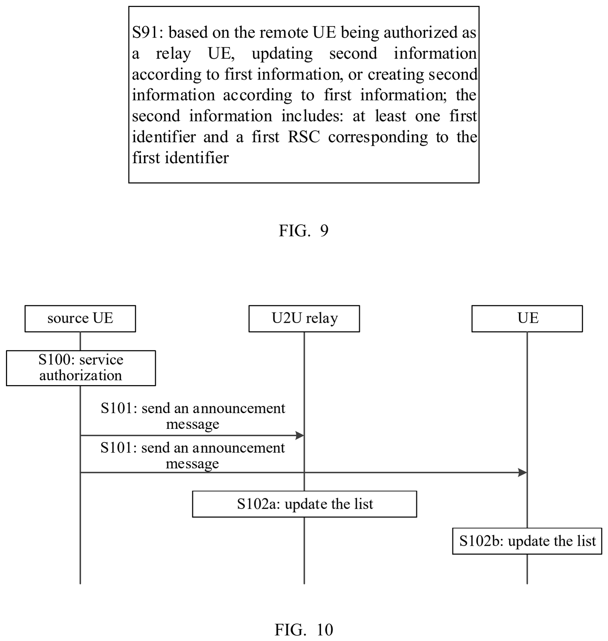

As shown in FIG. 9, an embodiment of the present disclosure provides an information processing method, performed by a second UE, including:
step S91: based on the remote UE being authorized as a relay UE, second information is updated according to first information, or second information is created according to first information; the second information includes: at least one first identifier and a first RSC corresponding to the first identifier.

Optionally, the second UE is a remote UE.

For example, the remote UE (receiver UE) is not currently a relay UE in the U2U relay communication, but is authorized as a relay UE of the U2U relay communication. The remote UE receives the first information, and stores the first identifier and the first RSC corresponding to the first identifier in the first information in the remote UE to generate the second information; or, the remote UE has stored the second information, and the remote UE adds the first identifier and the first RSC corresponding to the first identifier in the first information into the second information of the remote UE.

Thus, the remote UE may also store, that is, collect the first identifier of the first UE and the corresponding first RSC, so as to facilitate subsequent remote UE to broadcast the first identifier of the first UE, etc. That is, it facilitates the remote UE to discover the first UE.

An embodiment of the present disclosure provides an information processing method, performed by a second UE, including: sending a response message, where the response message at least includes: a first identifier, a second identifier, and a second RSC corresponding to the second identifier; and the second RSC is configured to indicate a second relay service.

In some embodiments, sending the response message includes: sending the response message to the first UE.

In some embodiments of the present disclosure, the response message may be the response message in the above embodiments; the second RSC may be the second RSC in the above embodiments; and the second relay service may be the second relay service in the above embodiments.

Optionally, the second relay service includes a second relay connectivity service. The second RSC is configured to indicate the second relay connectivity service.

Optionally, the second RSC corresponding to the second identifier may be one or more; one second RSC may be configured to indicate one second relay service.

Optionally, the response message is determined based on the solicitation message.

Optionally, the response message includes a relay indication. The relay indication may be the relay indication in the above embodiments.

Optionally, the second identifier and the second RSC corresponding to the second identifier are used by the first UE to update in third information. Optionally, the third information may at least include: at least one identifier of a UE and the RSC corresponding to the identifier of the UE. Optionally, the UE may be a relay UE and/or a remote UE.

The above embodiments may specifically refer to the description on the first UE side, and will not be repeated herein.

It should be noted that those skilled in the art may understand that the method provided in the embodiments of the present disclosure may be executed independently, or may be executed together with some methods in some embodiments of the present disclosure or some methods in the related art.

To further explain any embodiment of the present disclosure, a specific embodiment is provided below.

### Example 1

As shown in FIG. 10, an embodiment of the present disclosure provides an information processing method, performed by a communication device, where the communication device includes a source UE, a U2U relay (relay UE), and a UE; the source UE is the first UE in the above embodiments, the U2U relay is the relay UE of U2U relay communication in the above embodiments, and the UE is the remote UE in the above embodiments; the information processing method includes the following steps:
step S100: source UE service authorization. Optionally, the source UE is authorized to perform direct discovery, and necessary policy and parameters for direct discovery are preconfigured in the source UE.

step S101: the source UE sends an announcement message. Optionally, the source UE sends the announcement message (Announcement message) to a U2U relay or a UE, where the announcement message includes at least one of: a type indication, the first identifier of the source UE, the second identifier of the U2U relay, the second identifier of the UE, a relay indication, or the first RSC; the announcement message may further include a source L2 ID and a destination L2 ID. Optionally, when the source UE wants to be discovered via the U2U relay, the announcement message includes the relay indication and the first RSC; for example, when the relay indication is "0" or null, it indicates that the source UE is not allowed to be discovered via the U2U relay; or, when the relay indication is an integer greater than "1", it indicates that the source UE is allowed to be discovered via U2U relay with multiple hops.

Optionally, the first RSC is used for a relay connectivity service provided by the source UE; if the relay connectivity service provided by the source UE is not configured or supported by the U2U relay, the U2U relay may not put the information of the source UE into the list. Optionally, the information of the UE may be the first identifier in the above embodiments, such as a User Info ID; the list may be a list in the second information in the above embodiments, where the list includes at least one UE and the corresponding RSC.

step S102a: the U2U relay updates the list. Optionally, when the U2U relay receives an announcement message including the relay indication and the first RSC, the list is updated.

step S102b: the UE updates the list. Optionally, when the UE receives an announcement message including the relay indication and the first RSC, and the UE is authorized as a U2U relay, the UE creates or updates the list.

Optionally, in other cases, the UE ignores the announcement message.

### Example 2

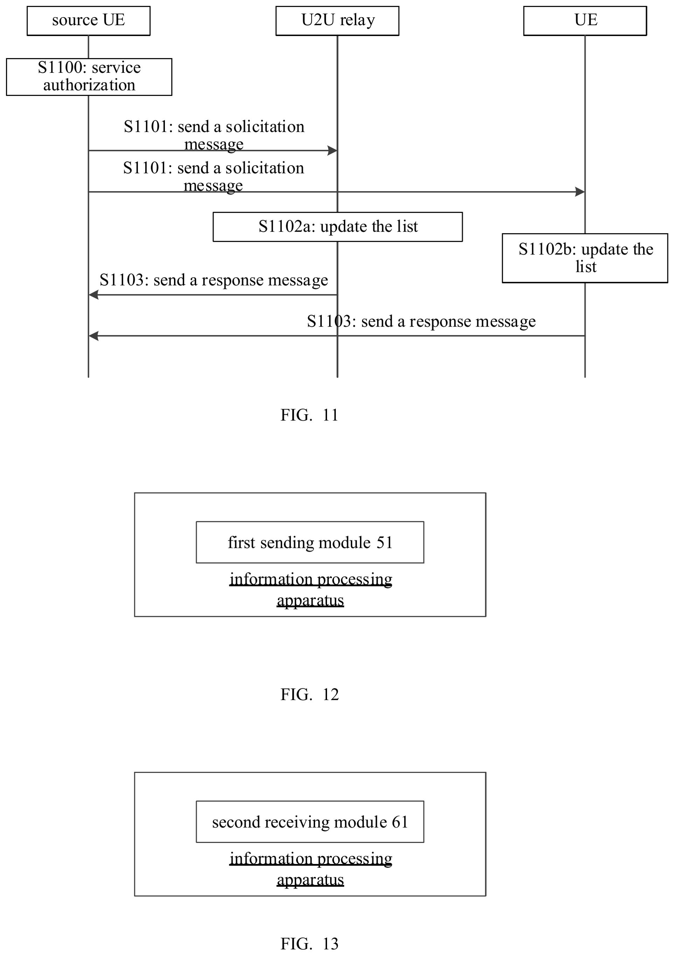

As shown in FIG. 11, an embodiment of the present disclosure provides an information processing method, performed by a communication device, where the communication device includes a source UE, a U2U relay, and a UE; the source UE is the first UE in the above embodiments, the U2U relay is the relay UE of U2U relay communication in the above embodiments, and the UE is the remote UE in the above embodiments; the information processing method includes the following steps:
step S1100: the source UE service authorization. Optionally, the source UE is authorized to perform direct discovery, and necessary policy and parameters for direct discovery are preconfigured in the source UE.

step S1101: the source UE sends a solicitation message. Optionally, the source UE sends a solicitation message (Solicitation Announcement message, or Solicitation message) to a U2U relay or a UE, where the solicitation message includes at least one of: a type indication, the first identifier of the source UE, the second identifier of the U2U relay, the second identifier of the UE, a relay indication, or the first RSC; the solicitation message may further include a source L2 ID and a destination L2 ID. Optionally, when the source UE wants to be discovered via the U2U relay, the solicitation message includes the relay indication and the first RSC. For example, when the relay indication is "0" or null, it indicates that the source UE is not allowed to be discovered via the U2U Relay; or, when the relay indication is an integer greater than "1", it indicates that the source UE is allowed to be discovered via U2U Relay with multiple hops.

Optionally, the first RSC is configured to indicate a relay connectivity service provided by the source UE; if the relay connectivity service provided by the source UE is not configured or supported by the U2U relay, the U2U relay may not put the information of the source UE into the list. Optionally, the information of the UE may be the first identifier in the above embodiments, such as a User Info ID; the list may be the second information in the above embodiments, which includes at least one UE and the corresponding RSC.

step S1102a: the U2U relay updates the list. Optionally, when the U2U relay receives a solicitation message including the relay indication and the first RSC, the list is updated.

step S1102b: the UE updates the list. Optionally, when the UE receives a solicitation message including the relay indication and the first RSC, and the UE is authorized as a U2U relay, the UE creates or updates the list.

Optionally, in other cases, the UE ignores the solicitation message.

step S1103: the U2U relay or the UE sends a response message. Optionally, the U2U relay sends a response message (Response message) to the source UE, where the response message includes: the second identifier of the U2U relay, the second identifier of the UE, and a second RSC. Optionally, the second RSC is configured to indicate a relay connectivity service provided by the U2U relay or to indicate a relay connectivity service provided by the UE.

The above embodiments may specifically refer to the description on the side of the first UE, and will not be repeated herein.

It should be noted that those skilled in the art may understand that the method provided in the embodiments of the present disclosure may be executed independently, or may be executed together with some methods in some embodiments of the present disclosure or some methods in the related art.

As shown in FIG. 12, a first aspect of the embodiments of the present disclosure provides an information processing apparatus, including:
a first sending module 51, configured to send first information, where the first information at least includes: a first identifier of the first UE, a second identifier of at least one second UE, and a first RSC corresponding to the first identifier; the first RSC is configured to indicate a first relay service.

The information processing apparatus provided in the embodiments of the present disclosure may be the first UE. Optionally, the first UE is a source UE.

In some embodiments, the first information further includes at least one of:
a relay indication, configured to indicate whether the second UE is allowed to broadcast the first identifier; or
a type indication, configured to indicate a type of a discovery message in relay communication.

In some embodiments, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

An embodiment of the present disclosure provides an information processing apparatus, including: a first sending module 51, configured to send an announcement message, where the announcement message includes the first information; or a first sending module 51, configured to send a solicitation message, where the solicitation message includes the first information.

In some embodiments, the second UE is a relay UE or a remote UE of U2U relay communication.

An embodiment of the present disclosure provides an information processing apparatus, including: a first receiving module, configured to receive a response message, where the response message at least includes: the first identifier, the second identifier, and a second RSC corresponding to the second identifier; the second RSC is configured to indicate a second relay service. Optionally, the second UE is a remote UE.

As shown in FIG. 13, an embodiment of the present disclosure provides an information processing apparatus, including:
a second receiving module 61, configured to receive first information, where the first information at least includes: a first identifier of the first UE, a second identifier of at least one second UE, and a first RSC corresponding to the first identifier; the first RSC is configured to indicate a first relay service.

The information processing apparatus provided in the embodiments of the present disclosure may be the second UE. Optionally, the second UE is a relay UE or a remote UE of U2U relay communication.

In some embodiments, the first information further includes at least one of:
a relay indication, configured to indicate whether the second UE is allowed to broadcast the first identifier; or
a type indication, configured to indicate a type of a discovery message in relay communication.

In some embodiments, the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

An embodiment of the present disclosure provides an information processing apparatus, including: a second receiving module 61, configured to receive an announcement message, where the announcement message includes the first information; or a second receiving module 61, configured to receive a solicitation message, where the solicitation message includes the first information.

An embodiment of the present disclosure provides an information processing apparatus, including: a processing module, configured to update second information according to the first information, where the second information includes: at least one first identifier and the first RSC corresponding to the first identifier.

An embodiment of the present disclosure provides an information processing apparatus, including: a processing module, configured to determine, based on the first relay service indicated by the first RSC not being supported by the second UE, not to update the first identifier and the first RSC corresponding to the first identifier into the first information.

An embodiment of the present disclosure provides an information processing apparatus, including: a processing module, configured to perform one of:
updating second information according to the first information, based on the remote UE being authorized as a relay UE, where the second information includes: at least one first identifier and the first RSC corresponding to the first identifier; or
creating second information according to the first information, based on the remote UE being authorized as a relay UE.

An embodiment of the present disclosure provides an information processing apparatus, including: a second sending module, configured to send a response message, where the response message at least includes: the first identifier, the second identifier, and a second RSC corresponding to the second identifier; the second RSC is configured to indicate a second relay service.

It should be noted that those skilled in the art may understand that the apparatus provided in the embodiments of the present disclosure may be implemented independently, or together with some apparatus in the embodiments of the present disclosure or some apparatus in the related art.

Regarding the apparatus in the above embodiments, the specific manners in which each module executes the operations have already been described in detail in the embodiments of the method, and will not be described in detail here.

An embodiment of the present disclosure provides a communication device, including a processor, a transceiver, a memory, and an executable program stored on the memory and operable to be run by the processor, where when the processor runs the executable program, the processor executes the information processing method as provided above.

In some embodiments, the processor may include various types of storage medium, which are non-transitory computer storage medium, and are capable of continuously storing the information stored thereon after the communication device is powered off.

Optionally, the communication device includes: the first UE or the second UE. Optionally, the first UE is a sender UE, and the second UE is a receiver UE. Optionally, the second UE is a relay UE or a remote UE of U2U relay communication.

The processor may be connected to the memory via a bus or the like, and is configured to read the executable program stored in the memory, for example, at least one of the methods shown in FIGS. 5 to 11.

An embodiment of the present disclosure provides a computer storage medium, where the computer storage medium stores an executable program; when executed by a processor, the executable program is capable of implementing the information processing method provided above, for example, at least one of the methods shown in FIGS. 5 to 11.

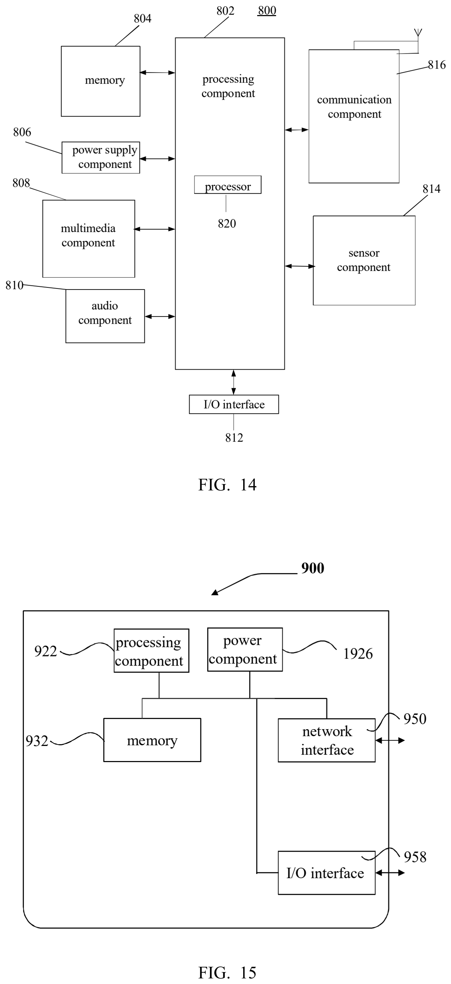

FIG. 14 is a block diagram illustrating a UE 800 according to an embodiment. For example, the UE 800 may be a mobile phone, a computer, a digital broadcasting UE, a messaging device, a game console, a tablet device, a medical equipment, a fitness equipment, a personal digital assistant, and so on.

Referring to FIG. 14, the UE 800 may include one or more components of the followings: a processing component 802, a memory 804, a power supply component 806, a multimedia component 808, an audio component 810, an input/output (I/O) interface 812, a sensor component 814, and a communication component 816.

The processing component 802 generally controls the whole operation of the UE 800, such as the operations related to display, phone call, data communication, camera operation and recording operation. The processing component 802 may include one or more processors 820 to perform instructions, to generate all or part of blocks of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store all types of data to support the operation of the UE 800. Examples of the data include the instructions of any applications or methods operated on the UE 800, contact data, phone book data, messages, pictures, videos, etc. The memory 804 may be implemented by any type of temporary or non-temporary storage devices or their combination, such as a static random access memory (SRAM), an electrically erasable programmable read-only memory (EEPROM), an electrically programmable read-only memory (EPROM), a programmable read-only memory (PROM), a read-only memory (ROM), a magnetic memory, a flash memory, a magnetic disk or an optical disk.

The power supply component 806 may provide power for all components of the UE 800. The power supply component 806 may include a power supply management system, one or more power supplies, and other units related to generating, managing and distributing power for the UE 800.

The multimedia component 808 includes an output interface screen provided between the UE 800 and the user. In some embodiments, a screen may include a liquid crystal display (LCD) and a touch panel (TP). When the screen includes a TP, the screen may be implemented as a touch screen to receive an input signal from the user. The touch panel includes one or more touch sensors to sense touching, sliding and gestures on the touch panel. The touch sensor may not only sense the boundary of a touch or slide action, but also detect the duration and pressure related to the touch or slide operation. In some embodiments, the multimedia component 808 includes a front camera and/or a rear camera. When the UE 800 is in an operation mode, such as a shooting mode or a video mode, the front camera or the rear camera may receive the external multimedia data. Each front camera and rear camera may be a fixed optical lens system or an optical lens system with a focal length and an optical zoom capacity.

The audio component 810 is configured to output and/or input an audio signal. For example, the audio component 810 includes a microphone (MIC). When the UE 800 is in an operation mode, such as a call mode, a record mode, and a speech recognition mode, the microphone is configured to receive the external audio signal. The received audio signal may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The button may include but not limited to a home button, a volume button, a start button and a lock button.

The sensor component 814 includes one or more sensors, configured to provide various aspects of status assessment for the UE 800. For example, the sensor component 814 may detect the on/off state of the UE 800 and the relative positioning of the component. For example, the component is a display and a keypad of the UE 800. The sensor component 814 may further detect the location change of the UE 800 or one component of the UE 800, the presence or absence of contact between the user and the UE 800, the orientation or acceleration/deceleration of the UE 800, and the temperature change of the UE 800. The sensor component 814 may include a proximity sensor configured to detect the existence of the objects nearby without any physical contact. The sensor component 814 may further include a light sensor such as a complementary metal oxide semiconductor (CMOS) or a charge-coupled device (CCD) image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the UE 800 and other devices. The terminal 800 may access wireless networks based on communication standard, such as Wi-Fi, 2G or 3G, or their combination. In an embodiment, the communication component 816 receives broadcast signals or broadcast-related information from an external broadcast management system via a broadcast channel. In an embodiment, the communication component 816 further includes a near field communication (NFC) module to facilitate short-range communication. For example, the NFC module may be achieved based on a radio frequency identification (RFID) technology, an infrared data association (IrDA) technology, an ultra-wide band (UWB) technology, a blue tooth (BT) technology and other technologies.

In an embodiment, the UE 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above methods.

In an embodiment, a non-transitory computer-readable storage medium is further provided which includes executable instructions, such as the memory 804 including executable instructions, the executable instructions may be executed by the processor 820 of the UE 800 to generate the above methods. For example, the non-transitory computer-readable storage medium may be a ROM, a random access memory (RAM), a CD-ROM, a magnetic tape, a floppy disk, an optical data storage device, etc.

FIG. 15 is a structural diagram illustrating a communication device according to an embodiment. The communication device 900 may be provided as a network side device.

As illustrated in FIG. 15, the communication device 900 includes a processing component 922, which further includes one or more processors, and a memory resource represented by a memory 932, for storing instructions executable by the processing component 922, such as an application program. The application program stored in the memory 932 may include one or more modules each corresponding to a set of instructions. In addition, the processing component 922 is configured to execute the instructions to perform the aforementioned methods as applied to the access device.

The communication device 900 may also include a power component 926 configured to perform power management of the communication device 900, a wired or wireless network interface 950 configured to connect the communication device 900 to a network, and an input output (I/O) interface 958. The communication device 900 may operate based on an operating system stored in the memory 932, such as Windows Server^{™}, Mac OS X^{™}, Unix^{™}, Linux^{™}, FreeBSD^{™}, or the like.

In the absence of contradictions, each step in a certain embodiment or example may be implemented as an independent embodiment, and the steps may be combined in any manner. For example, a solution obtained by removing part of the steps in a certain embodiment or example may also be implemented as an independent embodiment, and the order of steps in a certain embodiment or example may be arbitrarily exchanged. In addition, optional modes or optional examples in a certain embodiment or example may be combined in any manner; furthermore, embodiments or examples may be combined in any manner. For example, part or all of the steps of different embodiments or examples may be combined in any manner, and a certain embodiment or example may be combined in any manner with optional modes or optional examples of other embodiments or examples.

After considering the specification and practicing the present disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present disclosure is only limited by the appended claims.

## Claims

1. An information processing method, performed by a first User Equipment UE, comprising:
sending first information, wherein the first information at least comprises: a first identifier of the first UE, a second identifier of at least one second UE, and a first Relay Service Code RSC corresponding to the first identifier; and the first RSC is configured to indicate a first relay service.

2. The method according to claim 1, wherein the first information further comprises at least one of:
a relay indication, configured to indicate whether the second UE is allowed to broadcast the first identifier; or
a type indication, configured to indicate a type of a discovery message in relay communication.

3. The method according to claim 2, wherein the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

4. The method according to any one of claims 1 to 3, wherein sending the first information comprises one of:
sending an announcement message, the announcement message comprising the first information; or
sending a solicitation message, the solicitation message comprising the first information.

5. The method according to any one of claims 1 to 4, wherein the second UE is a relay UE or a remote UE of U2U relay communication.

6. The method according to claim 5, wherein the second UE is the remote UE; the method further comprises:
receiving a response message, wherein the response message at least comprises: the first identifier, the second identifier, and a second RSC corresponding to the second identifier; and the second RSC is configured to indicate a second relay service.

7. An information processing method, performed by a second User Equipment UE, comprising:
receiving first information, wherein the first information at least comprises: a first identifier of a first UE, a second identifier of at least one second UE, and a first Relay Service Code RSC corresponding to the first identifier; and the first RSC is configured to indicate a first relay service.

8. The method according to claim 7, wherein the first information further comprises at least one of:
a relay indication, configured to indicate whether the second UE is allowed to broadcast the first identifier; or
a type indication, configured to indicate a type of a discovery message in relay communication.

9. The method according to claim 8, wherein the relay indication is one of:
a first value, configured to indicate that the second UE is not allowed to broadcast the first identifier;
a second value, configured to indicate that the second UE is allowed to broadcast the first identifier; or
a third value, configured to indicate that the first identifier is allowed to be broadcast via multi-hop.

10. The method according to any one of claims 7 to 9, wherein receiving the first information comprises one of:
receiving an announcement message, the announcement message comprising the first information; or
receiving a solicitation message, the solicitation message comprising the first information.

11. The method according to any one of claims 7 to 10, wherein the second UE is a relay UE of U2U relay communication; and the method comprises:
updating second information according to the first information, wherein the second information comprises: at least one first identifier and the first RSC corresponding to the first identifier.

12. The method according to claim 11, further comprising:
determining, based on the first relay service indicated by the first RSC not being supported by the second UE, not to update the first identifier and the first RSC corresponding to the first identifier into the first information.

13. The method according to any one of claims 7 to 10, wherein the second UE is a remote UE; and the method comprises one of:
updating, based on the remote UE being authorized as a relay UE, second information according to the first information, wherein the second information comprises: at least one first identifier, and the first RSC corresponding to the first identifier; or
creating, based on the remote UE being authorized as a relay UE, second information according to the first information.

14. The method according to claim 10 or claim 13, further comprising:
sending a response message, wherein the response message at least comprises: the first identifier, the second identifier, and a second RSC corresponding to the second identifier; and the second RSC is configured to indicate a second relay service.

15. An information processing apparatus, comprising:
a first sending module, configured to send first information, wherein the first information at least comprises: a first identifier of a first UE, a second identifier of at least one second UE, and a first Relay Service Code RSC corresponding to the first identifier; and the first RSC is configured to indicate a first relay service.

16. An information processing apparatus, comprising:
a second receiving module, configured to receive first information, wherein the first information at least comprises: a first identifier of a first UE, a second identifier of at least one second UE, and a first Relay Service Code RSC corresponding to the first identifier; and the first RSC is configured to indicate a first relay service.

17. A communication device, comprising: a transceiver, a memory, and an executable program stored on the memory and operable to be run by a processor, wherein when the processor runs the executable program, the processor executes the information processing method according to any one of claims 1 to 6, or any one of claims 7 to 14.

18. A computer storage medium, wherein the computer storage medium stores a computer executable program, and when executed by a processor, the executable program is capable of implementing the information processing method according to any one of claims 1 to 6, or any one of claims 7 to 14.
